# EUROPEAN PATENT SPECIFICATION

(11) **EP 3 932 695 B1**
(45) Date of publication and mention of the grant of the patent: **02.09.2026**
(21) Application number: 19917978.9
(22) Date of filing: 15.11.2019
(51) Int. Cl.: B60C 11/03, B60C 11/12

(54) **MOTORCYCLE TIRE**
MOTORRADREIFEN
PNEU DE MOTOCYCLETTE

(30) Priority: 01.03.2019 JP 2019037664
(43) Date of publication of application: 05.01.2022
(73) Proprietor: BRIDGESTONE CORPORATION, Chuo-ku Tokyo 104-8340 (JP)
(72) Inventor: OBA, Hirofumi, Tokyo 104-8340 (JP); MAKIOKA, Toshiaki, Tokyo 104-8340 (JP); MIYASATO, Akira, Tokyo 104-8340 (JP)
(74) Representative: Marks & Clerk LLP
(86) International application number: PCT/JP2019/044830
(87) International publication number: WO 2020/179137

(56) References cited:
- EP-B1- 2 797 758
- WO-A1-2017/073768
- CN-A- 107 160 948
- JP-A- 2007 099 147
- JP-A- 2009 101 743
- JP-A- 2013 180 664
- JP-A- 2013 519 563
- JP-A- 2016 141 225
- JP-A- 2016 141 226
- JP-A- 2019 104 329
- US-A1- 2018 304 696

## Description

### TECHNICAL FIELD

The present invention relates to a tire for a two-wheeled vehicle (hereinafter, also simply referred to as "tire"). More particularly, the present invention relates to a pneumatic tire for a motorcycle which involves an improvement in the tread pattern to be formed on the tread surface of the tire.

### BACKGROUND ART

Because of the characteristics of two-wheeled vehicles to tilt their bodies upon cornering, differing from four-wheeled vehicles such as passenger cars, trucks, and buses, a tire for a two-wheeled vehicle has a tire shape with a circular cross section in which a tire crown portion has a smaller curvature radius as compared to a tire for a four-wheeled vehicle. That is, in a pneumatic tire for a two-wheeled vehicle, a central portion of a tread mainly contacts the ground when a vehicle is traveling straight and a shoulder portion of the tread contacts the ground upon cornering.

For example, Patent Document 5 discloses, as a related art relating to such a tire for a two-wheeled vehicle, a tire for an electric motorcycle as described below. This tire includes a carcass type reinforcing structure formed with a reinforcing component anchored to a bead on each side of the tire, and bead bases are configured to be attachable to a rim sheet. Further, side walls are formed as extended portions on the outer side in the radial direction of the respective beads, and the side walls extend outward in the radial direction and integrated with the tread provided with notches. These notches have a length of less than 1.2 times the width of the contact patch surface, and at least one of the notches is provided on the tread, and has at least one end terminating at a slit having a width of more than 2.5 mm and a length of from 2.5 to 10 mm. This technique is intended for an improved grip performance on a wet surface.

### RELATED ART DOCUMENT

### PATENT DOCUMENT

Patent Document 1: US 2018/304696 A1
Patent Document 2: JP 2013 180664 A
Patent Document 3: JP 2016 141226 A
Patent Document 4: EP 2 797 758 B1
Patent Document 5: JP 2013-519563 A
US 2018/304696 A1 provides the preamble to claim 1 as appended hereto. It discloses a pneumatic tire for a motorcycle including a tread portion formed into a ring shape, in which the tread portion is provided with shallow grooves having a width of 0.1 to 2.0mm and a depth of 0.1 to 2.0mm and extending in a tire circumferential direction.
JP 2013 180664 A discloses a motorcycle tire intended to suppress heat sag in a tread portion while maintaining cornering performance and tire life, based on the provision of oblique narrow grooves with specified groove widths, outer end positions, etc.
JP 2016 141226 discloses a pneumatic tire intended to increase gap absorbing performance on a roughened road surface, and thereby improve riding comfort performance and steering stability.
EP 2 797 758 B1 discloses a tire for motorcycles having a tread band comprising a central annular portion and two shoulder annular portions. herein the central annular portion (A) comprises at least two first substantially longitudinal grooves (18, 19) opposed to each other relative to the equatorial plane X-X of the tyre, and wherein the first substantially longitudinal grooves (18, 19) extend mainly in the central annular portion (A) and are at least partially facing each other, so as to delimit in the axial direction at least partially a tread band portion.

### SUMMARY OF THE INVENTION

### PROBLEMS TO BE SOLVED BY THE INVENTION

However, the technique disclosed in Patent Document 5 is not sufficient for ensuring drainage performance, and thus, a technique for further improving the traveling performance on a wet road surface without compromising the traveling performance on a dry road surface has been needed.

Accordingly, an object of the present invention is to provide a tire for a two-wheeled vehicle in which the traveling performance on a wet road surface is further improved without compromising the traveling performance on a dry road surface by improving a tread pattern to achieve an improved drainage performance.

### MEANS FOR SOLVING THE PROBLEMS

As a result of intensive studies, the present inventors have found that the problems described above can be solved by providing sipes with predetermined dimensions which communicate with main grooves with predetermined dimensions, in the tread portion, thereby completing the present invention.

Specifically, the tire for a two-wheeled vehicle according to the present invention is a tire for a two-wheeled vehicle, including a tread portion formed in an annular shape, wherein:
a plurality of main grooves and a plurality of sipes are provided in the tread portion, and at least a part of the plurality of sipes communicates with the main grooves;
each of the main grooves with sipes communicating with the sipes has a width of 2 mm or more and 12 mm or less, and a length of 15 mm or more and 200 mm or less; and
each of the communication sipes communicating with the main grooves with sipes has a depth of 2.0 mm or more, and at least a part of the communication sipes has a length of one time or more and three times or less of the ground contact width of the tire when a vehicle is traveling straight, wherein the tire has a negative ratio of 1% or more and 9% or less.

In the tire according to the present invention, a percentage of the communication sipes is preferably 50% or more of all the sipes. Further, in the tire according to the present invention, a number of the sipes is preferably 20% or more and 200% or less of a number of the main grooves.

Still further, in the tire according to the present invention, the communication sipes preferably include a communication sipe having a bent portion.

### EFFECTS OF THE INVENTION

By employing the constitution described above, and thereby improving the tread pattern to achieve an improved drainage performance, the present invention enabled a realization of a tire for a two-wheeled vehicle in which the traveling performance on a wet road surface is further improved without compromising the traveling performance on a dry road surface.

### BRIEF DESCRIPTION OF THE DRAWINGS

FIG. 1 is a partial development view showing a front tire as one example of a tire for a two-wheeled vehicle according to the present invention.
FIG. 2 is a cross-sectional view of a front tire in the width direction as one example of a tire for a two-wheeled vehicle according to the present invention.
FIG. 3 is a partial development view showing a rear tire as another example of a tire for a two-wheeled vehicle according to the present invention.
FIG. 4 is a cross-sectional view of a rear tire in the width direction as another example of a tire for a two-wheeled vehicle according to the present invention.
FIG. 5 is a partial development view showing a front tire used in Comparative Example 1.
FIG. 6 is a partial development view showing a rear tire used in Comparative Example 1.
FIG. 7A is a graph showing the magnitudes of cornering forces (CF) generated with respect to slip angles (SA) when camber angles (CA) of both front tires used in Example 1 and Comparative Example 1 are 0°.
FIG. 7B is a graph showing the magnitudes of the cornering forces (CF) generated with respect to the slip angles (SA) when the camber angles (CA) of the front tires used in Example 1 and Comparative Example 1 are 15°.
FIG. 7C is a graph showing the magnitudes of the cornering forces (CF) generated with respect to the slip angles (SA) when the camber angles (CA) of the front tires used in Example 1 and Comparative Example 1 are 30°.
FIG. 8A is a graph showing the magnitudes of cornering forces (CF) generated with respect to slip angles (SA) when camber angles (CA) of both rear tires used in Example 1 and Comparative Example 1 are 0°.
FIG. 8B is a graph showing the magnitudes of the cornering forces (CF) generated with respect to the slip angles (SA) when the camber angles (CA) of the rear tires used in Example 1 and Comparative Example 1 are 15°.
FIG. 8C is a graph showing the magnitudes of the cornering forces (CF) generated with respect to the slip angles (SA) when the camber angles (CA) of the rear tires used in Example 1 and Comparative Example 1 are 30°.

### MODE FOR CARRYING OUT THE INVENTION

Embodiments of the present invention will now be described in detail with reference to drawings.

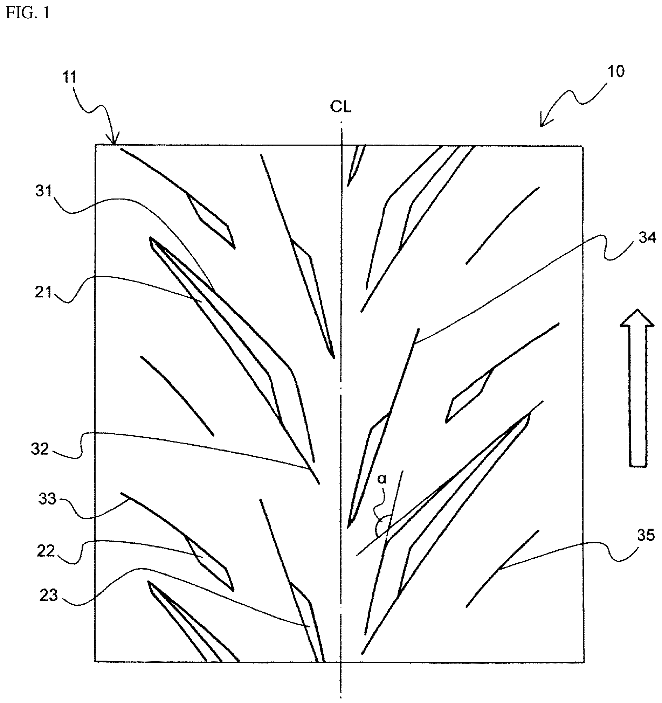

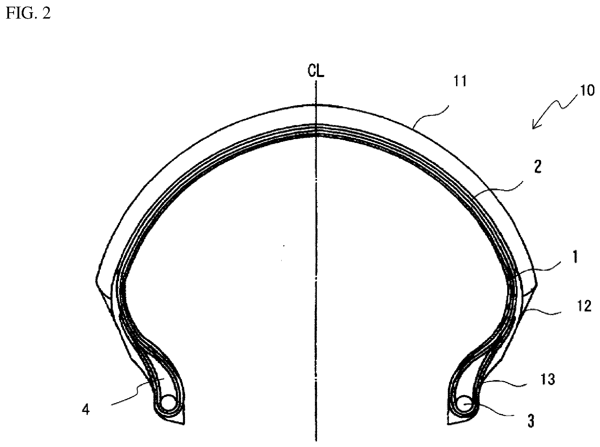

FIG. 1 shows a partial development view of a front tire as one example of a tire for a two-wheeled vehicle according to the present invention. Further, FIG. 2 shows a cross-sectional view of the front tire in the width direction, as one example of a tire for a two-wheeled vehicle according to the present invention.

As shown in the figures, a tire 10 for a two-wheeled vehicle according to the present invention includes a tread portion 11 formed in an annular shape, and a tread pattern including a plurality of main grooves 21 to 23 and a plurality of sipes 31 to 35 is formed in the tread portion 11. The main grooves 21 to 23 and the sipes 31 to 35 are provided such that none of them transverse a tire equator CL, and that both ends thereof terminate on one side of the tire tread surface. In the front tire shown in FIG. 1, each of the main grooves and the sipes is provided at an angle so as to extend toward the direction of rotation of the tire, from the inner side to the outer side in the tire width direction. The tread pattern shown in FIG. 1 is a directional pattern in which the direction of rotation of the tire when mounted on a vehicle is specified. The arrow in FIG. 1 indicates the direction of rotation of the tire.

In the tire 10 for a two-wheeled vehicle according to the present invention, at least a part of the plurality of the sipes 31 to 35 communicates with the main grooves 21 to 23. Specifically, in the example shown in FIG. 1, the sipes 31 to 34 communicate with the main grooves 21 to 23. In the present invention, it is important that the width and the length of the main grooves 21 to 23 with sipes, with which the sipes are in communication, and the depth and the length of the communication sipes 31 to 34 which are in communication with these main grooves 21 to 23 with sipes, satisfy predetermined requirements. According to the present invention, the main grooves and the sipes as a whole extend over the entire ground contact surface from the inner side to the outer side thereof, by allowing the sipes which have a depth and a length equal to or more than certain values and whose both ends terminate on one side of the tire tread surface, to communicate with the main grooves which have a length and a capacity equal to or more than certain values and whose both ends terminate on one side of the tire tread surface. As a result, it is possible to improve the drainage performance, and the traveling performance on a wet road surface. In addition, since an improvement in the drainage performance is achieved by providing sipes, instead of increasing the number of grooves, in the present invention, there is no risk of compromising the traveling performance on a dry road surface. This made it possible to realize a tire for a two-wheeled vehicle in which the traveling performance on a wet road surface is further improved without compromising the traveling performance on a dry road surface.

In the present invention, each of the main grooves 21 to 23 with sipes is required to have a width of 2 mm or more and 12 mm or less, and preferably has a width of 3 mm or more and 8 mm or less. Further, each of the main grooves 21 to 23 with sipes is required to have a length of 15 mm or more and 200 mm or less, and preferably has a length of 18 mm or more and 150 mm or less. When the width or the length of the main grooves 21 to 23 with sipes is smaller than the range described above, a sufficient drainage performance cannot be obtained, resulting in an insufficient traveling performance on a wet road surface. When the width or the length of the main grooves 21 to 23 with sipes is larger than the range described above, on the other hand, it leads to a decrease in rigidity, resulting in an insufficient traveling performance on a dry road surface.

The length of the main grooves 21 to 23 with sipes, as used in the present invention, refers to the length of a line segment connecting between the ends in the tire circumferential direction of each groove. Further, the width of the main grooves 21 to 23 with sipes as used herein refers to a value obtained by dividing the area of each groove by the length of the groove, and the area of each groove refers to the surface area of the opening of each groove.

In the present invention, each of the communication sipes 31 to 34 is required to have a depth of 2.0 mm or more, and preferably has a depth of 2.5 mm or more and 6.0 mm or less. When the depth of the communication sipes 31 to 34 is adjusted within the range described above, the drainage performance and the rigidity of the tread portion can be ensured in a well-balanced manner. The depth of the sipes as used herein refers to the maximum depth of each sipe from the opening of the sipe to the bottom of the sipe, as measured in the direction perpendicular to the tire surface.

Further, in the present invention, at least a part of the communication sipes 31 to 34 is required to have a length of one time or more and three times or less of the ground contact width of the tire when a vehicle is traveling straight. When the length of the communication sipes 31 to 34 is smaller than the range described above, a sufficient drainage performance cannot be obtained, resulting in an insufficient traveling performance on a wet road surface. When the length of the communication sipes 31 to 34 is larger than the range described above, on the other hand, the rigidity is decreased, resulting in an insufficient traveling performance on a dry road surface. The length of the above described sipes is preferably 1.3 times or more and 2.6 times or less. The length of the sipes as used herein refers to the length between both ends of each sipe, as measured along the sipe, on the tire surface.

The "ground contact width of the tire when a vehicle is traveling straight", as used in the present invention, refers to the maximum width of the ground contact surface of the tire, when the tire is mounted on an applicable rim, filled to a specified air pressure, and a load corresponding to 60% of the maximum load capacity is applied thereto. The "applicable rim" as used herein refers to a standard rim (or an "approved rim" or "recommended rim") in an applicable size described in any of the following standards, and the "specified air pressure" refers to an air pressure corresponding to the maximum load (maximum load capacity) of a single wheel in an applicable size described in any of the following standards. The "standard" refers to a standard defined by an industrial standard effective in the region where the tire is produced or used, and examples of the industrial standard include: "Year Book of The Tire and Rim Association Inc." in the United states; "Standards Manual of The European Tyre and Rim Technical Organization" in Europe; and "JATMA Year Book" of The Japan Automobile Tire Manufacturers Association.

In the present invention, at least a part of the communication sipes 31 to 34 is required to have the predetermined length described above. Specifically, it is preferred that 20% or more, more preferably 40% or more of the number of the communication sipes 31 to 34, of all the communication sipes 31 to 34, have the predetermined length described above. When the number of the communication sipes having the predetermined length described above is too small, there is a risk that the expected effects of the present invention cannot be obtained.

In the present invention, the communication sipes 31 to 34 are not particularly limited as long as the depth and the length thereof satisfy the requirement described above, but can preferably have the following configurations.

The width of the communication sipes 31 to 34 is preferably 0.5 mm or more and 2 mm or less, and more preferably 0.7 mm or more and 1.5 mm or less. When the width of the communication sipes 31 to 34 is adjusted within the range described above, the drainage performance and the rigidity of the tread portion can be ensured in a well-balanced manner, and thus is preferred. The width of the sipes as used herein refers to the opening width of each sipe, as measured at the opening of the sipe, in the direction perpendicular to the direction of extension of the sipe.

Each of the communication sipes 31 to 34 may have a linear shape, or a shape having a bent portion. From the viewpoint of ensuring the drainage performance, each of the communication sipes preferably has a linear shape. However, it is possible to compensate for the rigidity, by forming sipes having a bent portion, for example, sipes having a wave-like shape or a zig-zag shape. In the example shown in FIG. 1, for example, the communication sipe 31 has a bent portion. In the case of a sipe having a bent portion, the angle α of the bent portion of the sipe is preferably 90° or more and 170° or less, and more preferably 100° or more and 160° or less. The angle α of the bent portion of the sipe as used herein refers to an angle formed at the intersection between two tangent lines drawn at both end points of the bent portion.

In the present invention, the percentage of the communication sipes 31 to 34 is preferably 50% or more, and more preferably 70% or more, of all the sipes including the sipes which are not in communication with the main grooves (hereinafter, each also referred to as a "single sipe"). When the percentage of the communication sipes 31 to 34 is adjusted within the range described above, the drainage performance can further be enhanced, and thus is preferred.

Further, in the present invention, the number of all the sipes 31 to 35 is preferably 20% or more and 200% or less, and more preferably 40% or more and 180% or less, of the number of all the main grooves 21 to 23. When the number of the sipes is adjusted within the range described above, the drainage performance and the rigidity of the tread portion can be ensured, and thus is preferred.

In the present invention, the forms of communication between the communication sipes and the main grooves with sipes are not particularly limited. In particular, it is preferred that the communication sipes in which the shift in the angle between the direction of extension of each main groove with a sipe(s) and the direction of extension of each communication sipe communicating with the main groove is not more than 40°, are included in a percentage of 30% or more of the number of the main grooves with sipes. For example, in the example shown in FIG. 1, the shift in the angle is not more than 40° in each of the followings: between the direction of extension of each of the communication sipes 31 and 32 and the direction of extension of the main groove 21 with the sipes; between the direction of extension of the communication sipe 33 and the direction of extension of the main groove 22 with the sipe; and between the direction of extension of the communication sipe 34 and the direction of extension of the main groove 23 with the sipe. By employing such a configuration, the effect of improving the drainage performance due to the arrangement of the communication sipes can be more reliably obtained, and thus is preferred.

In the present invention, the "direction of extension of each main groove with a sipe(s)" refers to the direction in which the line segment connecting between the ends in the tire circumferential direction of each groove extends, and the "direction of extension of each communication sipe" refers to the direction in which the line segment connecting between both ends of each communication sipe extends.

Specifically, in the example shown in FIG.1, the communication sipe 31 is provided along the outer contour line of the main groove 21 with sipes, and communicates with the main groove 21 with sipes, at the outer end thereof in the tire width direction. The communication sipe 32 is provided substantially on the extension line extending in the direction of extension of the main groove 21 with sipes, at the inner end in the tire width direction of the main groove, and communicates with the main groove 21 with sipes, at the inner end thereof in the tire width direction. The communication sipe 33 is provided substantially on the extension line extending in the direction of extension of the main groove 22 with the sipe, at the outer end in the tire width direction of the main groove, and communicates with the main groove 22 with the sipe, at the outer end thereof in the tire width direction. The communication sipe 34 is provided substantially on the extension line extending in the direction of extension of the main groove 23 with the sipe, at the outer end in the tire width direction of the main groove, and communicates with the main groove 23 with the sipe, at the outer end thereof in the tire width direction.

In the present invention, other sipes which do not communicate with the main grooves may be provided, in addition to the communication sipes 31 to 34. The dimensions and the like of these other sipes are not particularly limited, and these sipes can be provided at an angle so as to extend toward the direction of rotation of the tire, from the inner side to the outer side in the tire width direction, in the same manner as the communication sipes and the like.

In the present invention, the main grooves 21 to 23 with sipes are not particularly limited as long as the width and the length thereof satisfy the requirement described above, but can preferably have the following configurations.

The depth of the main grooves 21 to 23 with sipes is preferably 2.5 mm or more and 10 mm or less, and more preferably 2.5 mm or more and 6 mm or less. By this configuration, the drainage performance and the rigidity of the tread portion can be ensured in a well-balanced manner, and thus is preferred. The depth of the main grooves as used herein refers to the maximum depth of each groove from the opening of the groove to the bottom of the groove, as measured in the direction perpendicular to the tire surface.

Each of the main grooves 21 to 23 with sipes can have a shape whose outer contour line is composed of 3 or more curved lines and/or straight lines. Each of the communication sipes 31 to 34 may be provided so as to extend from any of the corners at which these curved lines and/or straight lines forming the contour of each of the main grooves 21 to 23 with sipes meet. Further, in the front tire shown in FIG.1, each of the main grooves 21 to 23 with sipes can be provided such that the inclination angle thereof with respect to the tire circumferential direction increases toward the direction of rotation of the tire.

In the present invention, other main grooves which do not communicate with sipes may be provided, in addition to the main grooves 21 to 23 with sipes. The dimensions and the like of these other main grooves are not particularly limited, and these grooves can be provided at an angle so as to extend toward the direction of rotation of the tire, from the inner side to the outer side in the tire width direction, in the same manner as the main grooves with sipes, and the like.

The main grooves and the sipes in the present invention can be arranged in a line symmetrical manner taking the tire equator CL as the axis, and such that the pattern of the grooves and the sipes on one side of the tread surface with the tire equator CL as the center, is shifted from the pattern on the other side, for example, by 1/2 to 1/3 of the arrangement pitch.

Further, the tire according to the present invention preferably has a negative ratio of 15% or less, more preferably 1% or more and 15% or less, and still more preferably 1% or more and 9% or less. When the negative ratio is adjusted within the range described above, the rigidity of the tread portion can be favorably ensured, and thus is preferred. The term "negative ratio" as used herein refers to the percentage of the grooves excluding the sipes, with respect to the area of the tread surface. The present invention is advantageous in that the drainage performance can be improved, while reducing the negative ratio to a low level to ensure rigidity.

In the tire according to the present invention, the tread pattern on the tire tread surface is required to satisfy the requirements described above, and details regarding the tire structures other than those, materials to be used and the like are not particularly limited. However, the following configurations can be employed, for example.

As shown in FIG. 2, for example, the tire 10 according to the present invention includes a pair of side wall portions 12 and a pair of bead portions 13 which are sequentially disposed on the inner side in the tire radial direction of the tread portion 11 formed in an annular shape. Further, the tire 10 according to the present invention includes at least one carcass ply 1 as a skeleton, and at least one belt layer 2 disposed on the outer side in the tire radial direction of the carcass ply 1 at its position corresponding to the tread portion 11.

The carcass ply 1 is formed by arranging textile cords having a relatively high elasticity in parallel with one another. The number of the carcass ply(ies) 1 to be used may be one or two, or three or more. Both end portions of the carcass ply 1 may be folded back at the bead portions 13 from the inner side to the outer side of the tire, around bead cores 3 embedded in the bead portions 13, and fixed. Alternatively, bead wires may be used to sandwich and fix the respective end portions from both sides. Either of these fixing methods may be used.

The belt layer 2 may be, for example, a spiral belt composed of a rubber-coated cord(s) wound helically in the tire circumferential direction. Alternatively, the belt layer 2 may be one composed of two or more crossed belt layers in which the layers are disposed such that the directions of the cords cross one another between the layers. Examples of a reinforcing material to be included in the belt layer include a Nylon fiber, an aromatic polyamide (brand name: Kevlar), and steel. Among these, an aromatic polyamide or steel is a reinforcing material which does not elongate even at a high temperature and is capable of reducing the expansion of the tread portion.

Further, in the tire according to the present invention, bead fillers 4 can be disposed on the outer side in the tire radial direction of the bead cores 3, and an inner liner, which is not shown in FIG. 2, can be disposed as the innermost layer of the tire.

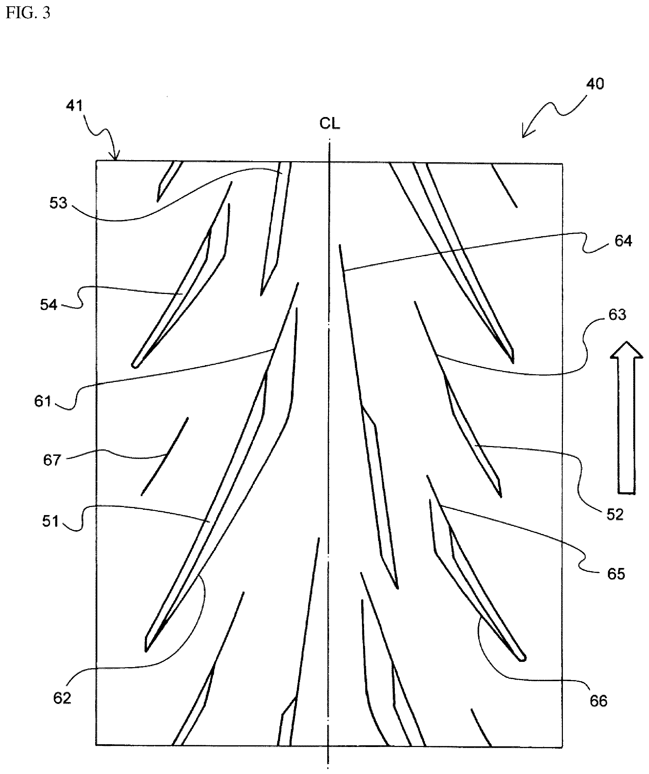

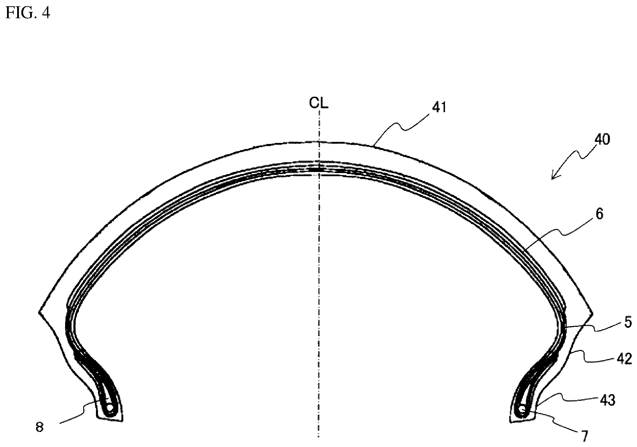

FIG. 3 shows a partial development view of a rear tire which is another example of the tire for a two-wheeled vehicle according to the present invention. Further, FIG. 4 shows a cross-sectional view in the width direction of the rear tire which is another example of the tire for a two-wheeled vehicle according to the present invention. In a tire 40 for a two-wheeled vehicle, as well, the only important point is the fact that main grooves 51 to 54 with sipes having a predetermined width and length, and communication sipes 61 to 66 which communicate with these main grooves and which satisfy predetermined depth and length requirements, are provided in a tread portion 41. This configuration enables to obtain the expected effects of the present invention.

The tire 40 for a two-wheeled vehicle according to the present invention, shown in the figures, includes the tread portion 41 formed in an annular shape, and a tread pattern including a plurality of the main grooves 51 to 54 and a plurality of the sipes 61 to 67 is formed in the tread portion 41. The main grooves 51 to 54 and the sipes 61 to 67 are provided such that none of them transverse the tire equator CL, and that both ends thereof terminate on one side of the tire tread surface. In the rear tire shown in FIG.3, each of the main grooves and the sipes is provided at an angle so as to extend toward the direction opposite from the direction of rotation of the tire, from the inner side to the outer side in the tire width direction. The tread pattern shown in FIG. 3 is a directional pattern in which the direction of rotation of the tire when mounted on a vehicle is specified. The arrow in FIG. 3 indicates the direction of rotation of the tire.

In the tire 40 for a two-wheeled vehicle according to the present invention, at least a part of the plurality of the sipes 61 to 67, specifically, the communication sipes 61 to 66 communicate with the main grooves 51 to 54 with sipes. The configurations and preferred conditions of the main grooves including the main grooves 51 to 54 with sipes, and of the sipes including the communication sipes 61 to 66, in this case, can be the same as those of the main grooves 21 to 23 with sipes and the communication sipes 31 to 34. Therefore, the description thereof is omitted.

Specifically, in the example shown in FIG. 3, the communication sipe 61 is provided substantially on the extension line extending in the direction of extension of the main groove 51 with sipes, at the inner end in the tire width direction of the main groove, and communicates with the main groove 51 with sipes, at the inner end thereof in the tire width direction. The communication sipe 62 is provided along the outer contour line of the main groove 51 with sipes, and communicates with the main groove 51 with sipes, at the outer end thereof in the tire width direction. The communication sipe 63 is provided substantially on the extension line extending in the direction of extension of the main groove 52 with the sipe, at the inner end in the tire width direction of the main groove, and communicates with the main groove 52 with the sipe, at the inner end thereof in the tire width direction. The communication sipe 64 is provided substantially on the extension line extending in the direction of extension of the main groove 53 with the sipe, at the inner end in the tire width direction of the main groove, and communicates with the main groove 53 with the sipe, at the inner end thereof in the tire width direction. The communication sipe 65 is provided substantially on the extension line extending in the direction of extension of the main groove 54 with sipes, at the inner end in the tire width direction of the main groove, and communicates with the main groove 54 with sipes, at the inner end thereof in the tire width direction. The communication sipe 66 is provided along the outer contour line of the main groove 54 with sipes, and communicates with the main groove 54 with sipes, at the outer end thereof in the tire width direction.

Further, in the case of providing other main grooves and/or sipes, in the rear tire shown in FIG. 3, each of the other grooves and/or sipes can be provided at an angle so as to extend toward the direction opposite from the direction of rotation of the tire, from the inner side to the outer side in the tire width direction, in the same manner as the main grooves with sipes, the communication sipes and the like.

As shown in FIG. 4, for example, the tire 40 according to the present invention includes a pair of side wall portions 42 and a pair of bead portions 43 which are sequentially disposed on the inner side in the tire radial direction of the tread portion 41 formed in an annular shape. Further, the tire 40 according to the present invention includes at least one carcass ply 5 as a skeleton, and at least one belt layer 6 disposed on the outer side in the tire radial direction of the carcass ply 5 at its position corresponding to the tread portion 41. The configurations and preferred conditions of the carcass ply 5, the belt layer 6 and the like can be the same as those in the tire 10, and thus, the description thereof is omitted.

Further, in the tire according to the present invention, bead fillers 8 can be disposed on the outer side in the tire radial direction of bead cores 7 embedded in the bead portions 43, and an inner liner, which is not shown in FIG. 4, can be disposed at the innermost layer of the tire.

The tire according to the present invention is applicable to both a front tire and a rear tire of a motorcycle and applicable to both a tire with a radial structure and a tire with a bias structure.

### EXAMPLES

The present invention will now be described in specific detail by way of Examples.

### (Example 1)

A front tire having a tread pattern as shown in FIG. 1 and having a tire size of 120/70ZR17M/C and a rear tire having a tread pattern shown in FIG. 3 and having a tire size of 190/55ZR17M/C were evaluated.

The front tire of Example 1 was configured to satisfy the following requirements.

| | |
|---|---|
| Main groove 21 with sipes width: 4 mm, length: | 74 mm, depth: 3.5 mm |
| Main groove 22 with a sipe width: 4 mm, length: | 18 mm, depth: 3 mm |
| Main groove 23 with a sipe width: 3 mm, length: | 37 mm, depth: 4 mm |
| Communication sipe 31 length: | 2.6 times the ground contact width of the tire when a |
| vehicle is traveling straight, width: 1 mm, depth: | 3.5 mm |
| Communication sipe 32 length: | 0.6 times the ground contact width of the tire when a |
| vehicle is traveling straight, width: 1 mm, depth: | 3.5 mm |
| Communication sipe 33 length: | 0.7 times the ground contact width of the tire when a |
| vehicle is traveling straight, width: 1 mm, depth: | 3 mm |
| Communication sipe 34 length: | 0.8 times the ground contact width of the tire when a |
| vehicle is traveling straight, width: 1 mm, depth: | 4 mm |
| Single sipe 35 length: | 0.9 times the ground contact width of the tire when a vehicle is |
| traveling straight, width: 1 mm, depth: | 2.5 mm |
| Percentage of communication sipes: | 80% |
| Number of sipes: | 167% of the number of main grooves |
| Negative ratio: | 5% |

The rear tire of Example 1 was configured to satisfy the following requirements.

| | |
|---|---|
| Main groove 51 with sipes | width: 5 mm, length: 147 mm, depth: 5 mm. |
| Main groove 52 with a sipe | width: 4 mm, length: 60 mm, depth: 4.5 mm |
| Main groove 53 with a sipe | width: 5 mm, length: 85 mm, depth: 6 mm. |
| Main groove 54 with sipes | width: 4 mm, length: 78 mm, depth: 4 mm |
| Communication sipe 61 | length: 0.7 times the ground contact width of the tire when a |
| vehicle is traveling straight, width: 1 mm, depth: | 5 mm |
| Communication sipe 62 length: | 2.6 times the ground contact width of the tire when a |
| vehicle is traveling straight, width: 1 mm, depth: | 5 mm |
| Communication sipe 63 length: | 0.6 times the ground contact width of the tire when a |
| vehicle is traveling straight, width: 1 mm, depth: | 4.5 mm |
| Communication sipe 64 length: | 1.2 times the ground contact width of the tire when a |
| vehicle is traveling straight, width: 1 mm, depth: | 6 mm. |
| Communication sipe 65 length: | 0.4 times the ground contact width of the tire when a |
| vehicle is traveling straight, width: 1 mm, depth: | 4 mm. |
| Communication sipe 66 length: | 1.4 times the ground contact width of the tire when a |
| vehicle is traveling straight, width: 1 mm, depth: | 4 mm. |
| Single sipe 67 length: | 0.7 times the ground contact width of the tire when a vehicle is traveling |
| straight, width 1: mm, depth: | 3.5 mm |
| Percentage of communication sipes: | 86% |
| Number of sipes: | 175% of the number of main grooves |
| Negative ratio: | 5% |

### (Comparative Example 1)

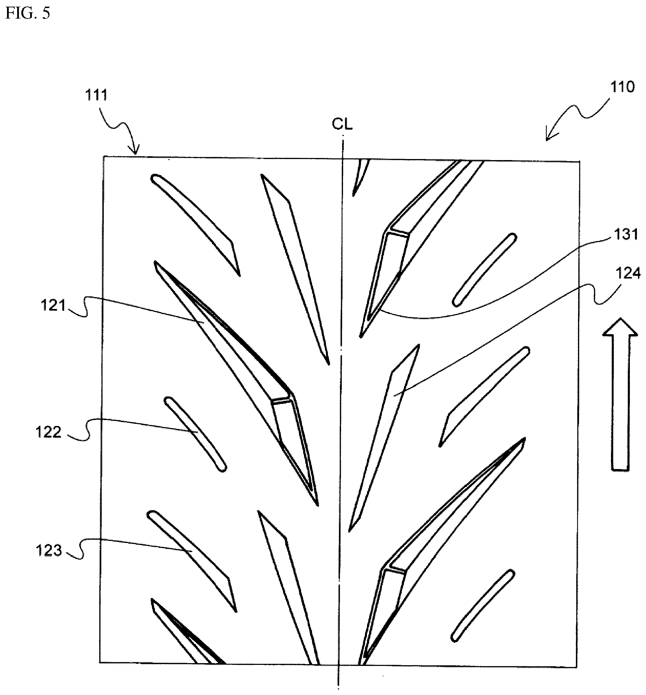

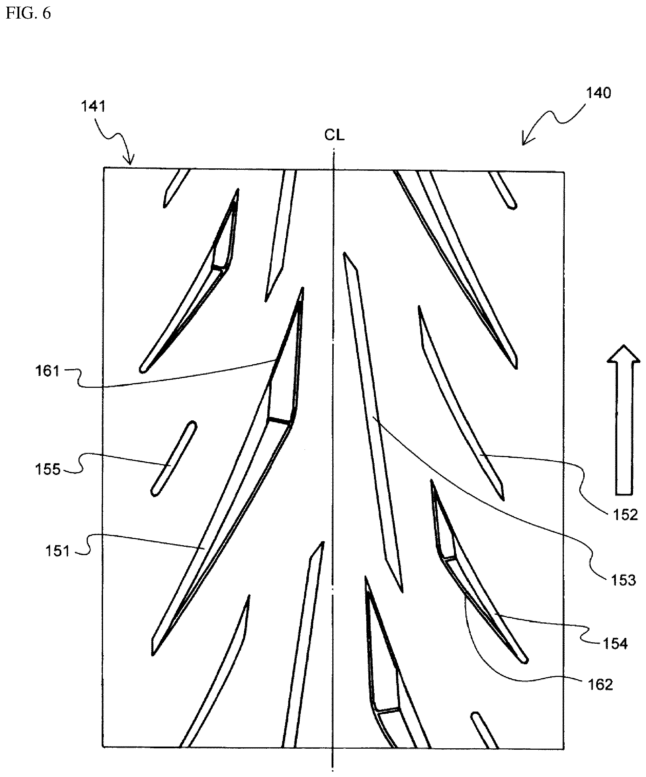

As the tires of Comparative Example 1, a front tire 110 having a tread pattern shown in FIG. 5 in a tread portion 111 and having a tire size of 120/70ZR17M/C and a rear tire 140 having a tread pattern shown in FIG. 6 in a tread portion 141 and having a tire size of 190/55ZR17M/C were used.

The front tire of Comparative Example 1 was configured to satisfy the following requirements.

| | |
|---|---|
| Main groove 121 width: | 4 mm, length: 74 mm, depth: 3.5 mm |
| Main groove 122 | width: 3 mm, length: 33 mm, depth: 2.5 mm |
| Main groove 123 | width: 4 mm, length: 46 mm, depth: 3 mm |
| Main groove 124 | width: 4 mm, length: 71 mm, depth: 4 mm |
| Communication sipe 131 length: | 2.7 times the ground contact width of the tire when a |
| vehicle is traveling straight, width: | 1 mm, depth: 0.3 mm |
| Percentage of communication sipes: | 100 |
| Number of sipes: | 25% of the number of main grooves. |
| Negative ratio: | 8% |

The rear tire of Comparative Example 1 was configured to satisfy the following requirements.

| | |
|---|---|
| Main groove 151 width: | 5 mm, length: 151 mm, depth: 5 mm |
| Main groove 152 width: | 4 mm, length: 105 mm, depth: 4.5 mm |
| Main groove 153 width: | 5 mm, length: 170 mm, depth: 6 mm |
| Main groove 154 width: | 4 mm, length: 77 mm, depth: 4 mm |
| Main groove 155 width: | 3 mm, length: 42 mm, depth: 3.5 mm |
| Communication sipe 161 length: | 3.0 times the ground contact width of the tire when a |
| vehicle is traveling straight, width: | 1 mm, depth: 0.3 mm |
| Communication sipe 162 length: | 1.6 times the ground contact width of the tire when a |
| vehicle is traveling straight, width: | 1 mm, depth: 0.3 mm |
| Percentage of communication sipes: | 100% |
| Number of sipes: | 40% of the number of main grooves |
| Negative ratio: | 7% |

The sensory evaluation by a driver was performed for the ride quality performance on a dry road surface and the braking performance on a wet road surface, when the front tire and the rear tire of each of Example 1 and Comparative Example 1 were mounted on a vehicle. The evaluation results are indicated by indices taking the result of Comparative Example 1 as 100. A larger value indicates a better traveling performance. The results thereof are shown in the following Table 1.

**[Table 1]**

| | Example 1 | Comparative Example 1 |
|---|---|---|
| Ride quality performance on dry road surface (index) | 103 | 100 |
| Braking performance on wet road surface (index) | 100 | 100 |

It is evident from Table 1 that the traveling performance on a wet road surface and the traveling performance on a dry road surface are achieved in a well-balanced manner, in the tires of Example 1 in which the sipes satisfying predetermined depth and length requirements are in communication with the main grooves having a predetermined width and length, as compared to the tires of Comparative Example 1 in which such requirements are not satisfied.

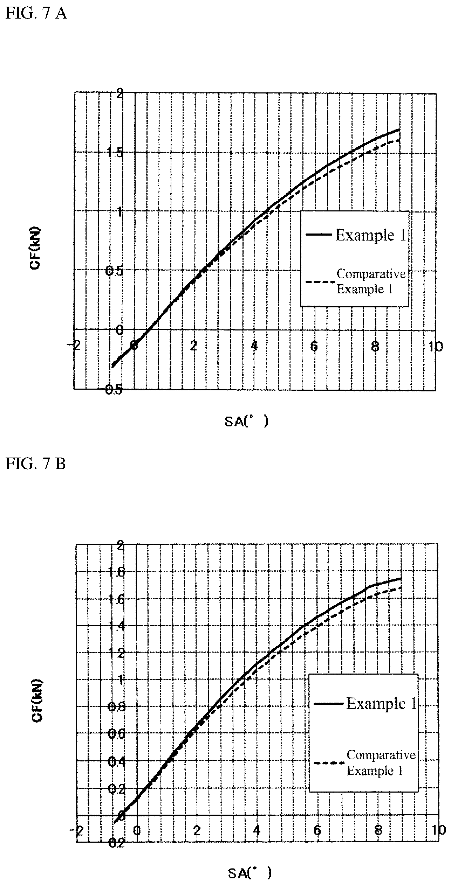

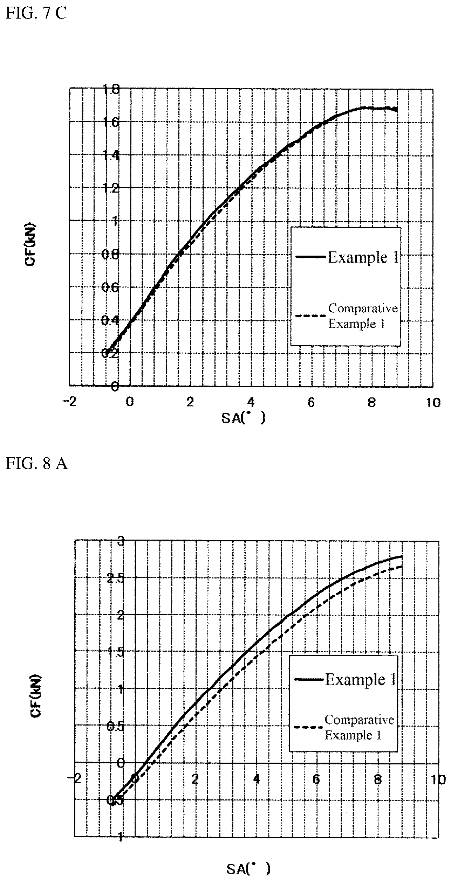

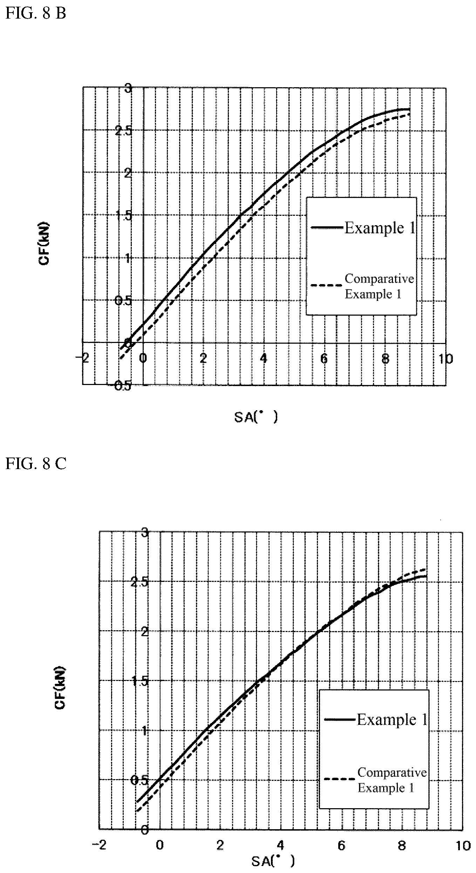

Further, the steering performance was evaluated by a laboratory test, for each of the front tires (inner pressure: 250 kPa, load: 1.3 kN) and the rear tires (inner pressure: 290 kPa, load: 2 kN) of Example 1 and Comparative Example 1. Specifically, the magnitude of each cornering force (CF) generated with respect to the slip angle (SA) was measured under conditions with a camber angle (CA) of 0°, 15° or 30°. The results thereof are shown in FIG. 7A to FIG. 8C. That is, FIG. 7A shows the results when the CA of each front tire is 0°; FIG. 7B shows the results when the CA of each front tire is 15°; and FIG. 7C shows the results when the CA of each front tire is 30°. Further, FIG. 8A shows the results when the CA of each rear tire is 0°; FIG. 8B shows the results when the CA of each rear tire is 15°; and FIG. 8C shows the results when the CA of each rear tire is 30°.

It was confirmed from the results shown in FIG. 7A to FIG. 8C that the magnitude of the cornering force (CF) generated with respect to the slip angle (SA) is improved in Example 1 as compared to Comparative Example 1, in any of the camber angle (CA) conditions of 0°, 15° and 30°. In particular, it can be seen that a sufficient cornering force can be obtained when the camber angle is small.

### DESCRIPTION OF SYMBOLS

- 1, 5: carcass ply
- 2, 6: belt layer
- 3, 7: bead core
- 4, 8: bead filler
- 10, 40, 110, 140: tire for a two-wheeled vehicle
- 11, 41, 111, 141: tread portion
- 12, 42: side wall portion
- 13, 43: bead portion
- 21 to 23, 51 to 54: main groove with a sipe(s)
- 31 to 34, 61 to 66: communication sipe
- 35, 67: single sipe
- 121 to 124, 151 to 155: main groove
- 131, 161 to 162: communication sipe

## Claims

1. A tire (10) for a two-wheeled vehicle, comprising a tread portion (11) formed in an annular shape,
wherein:
a plurality of main grooves (21, 22, 23) and a plurality of sipes (31, 32, 33, 34, 35) are provided in the tread portion (11), and at least a part of the plurality of sipes (31, 32, 33, 34, 35) communicates with the main grooves (21, 22, 23);
each of the main grooves (21, 22, 23) with sipes (31, 32, 33, 34) which are in communication with the sipes (31, 32, 33, 34) has a width of 2 mm or more and 12 mm or less, and a length of 15 mm or more and 200 mm or less; and
each of the communication sipes (31, 32, 33, 34) which are in communication with the main grooves (21, 22, 23) with sipes (31, 32, 33, 34) has a depth of 2.0 mm or more, and at least a part of the communication sipes (31, 32, 33, 34) has a length of one time or more and three times or less of the ground contact width of the tire (10) when a vehicle is traveling straight,
the "ground contact width of the tire when a vehicle is traveling straight" refers to the maximum width of the ground contact surface of the tire, when the tire is mounted on an applicable rim, filled to a specified air pressure, and a load corresponding to 60% of the maximum load capacity is applied thereto,
the "applicable rim" refers to a standard rim (or an "approved rim" or "recommended rim") in an applicable size described in any of the following standards,
the "specified air pressure" refers to an air pressure corresponding to the maximum load (maximum load capacity) of a single wheel in an applicable size described in any of the following standards,
the "standard" refers to a standard defined by an industrial standard effective in the region where the tire is produced or used, and examples of the industrial standard include: "Year Book of The Tire and Rim Association Inc." in the United states; "Standards Manual of The European Tyre and Rim Technical Organization" in Europe; and "JATMA Year Book" of The Japan Automobile Tire Manufacturers Association,
wherein the tire (10) has a negative ratio of 1% or more and 9% or less.

2. The tire (10) for a two-wheeled vehicle according to claim 1, wherein a percentage of the communication sipes (31, 32, 33, 34) is 50% or more of all the sipes (31, 32, 33, 34, 35).

3. The tire (10) for a two-wheeled vehicle according to claim 1 or 2, wherein a number of the sipes (31, 32, 33, 34, 35) is 20% or more and 200% or less of a number of the main grooves (21, 22, 23).

4. The tire (10) for a two-wheeled vehicle according to any one of claims 1 to 3, wherein the communication sipes (31, 32, 33, 34) include a communication sipe (31) having a bent portion.

## Patentansprüche

1. Reifen (10) für ein zweirädriges Fahrzeug, umfassend einen Laufflächenabschnitt (11), der in einer ringförmigen Gestalt geformt ist,
wobei:
im Laufflächenabschnitt (11) eine Vielzahl von Hauptrillen (21, 22, 23) und eine Vielzahl von Lamellen (31, 32, 33, 34, 35) bereitgestellt werden, wobei zumindest ein Teil der einen Vielzahl von Lamellen (31, 32, 33, 34, 35) mit den Hauptrillen (21, 22, 23) in Verbindung steht,
jede der Hauptrillen (21, 22, 23) mit Lamellen (31, 32, 33, 34), die mit den Lamellen (31, 32, 33, 34) in Verbindung stehen, eine Breite von 2 mm oder mehr und 12 mm oder weniger und eine Länge von 15 mm oder mehr und 200 mm oder weniger aufweist; und
jede der Verbindungslamellen (31, 32, 33, 34), die mit den Hauptrillen (21, 22, 23) mit Lamellen (31, 32, 33, 34) in Verbindung stehen, eine Tiefe von 2,0 mm oder mehr aufweist, und zumindest ein Teil der Verbindungslamellen (31, 32, 33, 34) eine Länge des Einfachen oder mehr und des Dreifachen oder weniger der Bodenkontaktbreite des Reifens (10) aufweist, wenn ein Fahrzeug geradeaus fährt,
die "Bodenkontaktbreite des Reifens, wenn ein Fahrzeug geradeaus fährt" sich auf die maximale Breite der Bodenkontaktfläche des Reifens, wenn der Reifen auf einer anwendbaren Felge montiert, mit einem vorgegebenen Luftdruck befüllt und eine Last, die 60 % der maximalen Tragfähigkeit entspricht, auf denselben angewendet wird,
der Begriff "anwendbare Felge" sich auf eine Standardfelge (oder eine "zugelassene Felge" oder "empfohlene Felge") in einer anwendbaren Größe bezieht, die in einem der folgenden Standards beschrieben ist,
der Begriff "vorgegebener Luftdruck" sich auf einen Luftdruck bezieht, welcher der maximalen Last (maximalen Tragfähigkeit) eines einzelnen Rades in einer anwendbaren Größe entspricht, die in einem der folgenden Standards beschrieben ist,
der Begriff "Standard" sich auf einen Standard bezieht, der durch eine in der Region, wo der Reifen hergestellt oder verwendet wird, geltende Industrienorm definiert ist, und Beispiele des Industriestandards schließen Folgendes ein: "Year Book of The Tire and Rim Association Inc." in den Vereinigten Staaten; "Standards Manual of The European Tyre and Rim Technical Organization" in Europa; und "JATMA Year Book" der Japan Automobile Tire Manufacturers Association,
wobei der Reifen (10) ein negatives Verhältnis von 1 % oder mehr und 9 % oder weniger aufweist.

2. Reifen (10) für ein zweirädriges Fahrzeug nach Anspruch 1, wobei ein Prozentanteil der Verbindungslamellen (31, 32, 33, 34) 50 % oder mehr aller Lamellen (31, 32, 33, 34, 35) beträgt.

3. Reifen (10) für ein zweirädriges Fahrzeug nach Anspruch 1 oder 2, wobei eine Anzahl der Lamellen (31, 32, 33, 34, 35) 20 % oder mehr und 200 % oder weniger einer Anzahl der Hauptrillen (21, 22, 23) beträgt.

4. Reifen (10) für ein zweirädriges Fahrzeug nach einem der Ansprüche 1 bis 3, wobei die Verbindungslamellen (31, 32, 33, 34) eine Verbindungslamelle (31) einschließen, die einen gebogenen Abschnitt aufweist.

## Revendications

1. Pneu (10) pour véhicule à deux roues, comprenant une bande de roulement (11) de forme annulaire,
dans lequel :
une pluralité de rainures principales (21, 22, 23) et une pluralité de lamelles (31, 32, 33, 34, 35) sont prévues dans la partie de la bande de roulement (11), et au moins une partie de la pluralité de lamelles (31, 32, 33, 34, 35) communique avec les rainures principales (21, 22, 23) ;
chacune des rainures principales (21, 22, 23) avec des lamelles (31, 32, 33, 34) qui communiquent avec les lamelles (31, 32, 33, 34) présente une largeur de 2 mm ou plus et de 12 mm ou moins, et une longueur de 15 mm ou plus et de 200 mm ou moins ; et
chacune des lamelles de communication (31, 32, 33, 34) qui communiquent avec les rainures principales (21, 22, 23) avec les lamelles (31, 32, 33, 34) présente une profondeur de 2,0 mm ou plus, et au moins une partie des lamelles de communication (31, 32, 33, 34) présente une longueur d'une fois ou plus et de trois fois ou moins la largeur de contact au sol du pneu (10) lorsqu'un véhicule se déplace en ligne droite,
la « largeur de contact au sol du pneu lorsque le véhicule se déplace en ligne droite » fait référence à la largeur maximale de la surface de contact au sol du pneu, lorsque celui-ci est monté sur une jante appropriée, gonflé à une pression d'air spécifiée et qu'une charge correspondant à 60 % de la capacité de charge maximale lui est appliquée.
L'expression « jante applicable » désigne une jante standard (ou une « jante homologuée » ou une « jante recommandée ») dans une dimension applicable décrite dans l'une des normes suivantes :
la « pression d'air spécifiée » fait référence à une pression d'air correspondant à la charge maximale (capacité de charge maximale) d'une seule roue d'une taille applicable décrite dans l'une des normes suivantes,
la « norme » fait référence à une norme définie par une norme industrielle en vigueur dans la région dans laquelle le pneu est produit ou utilisé et des exemples de normes industrielles incluent : « Year Book of The Tire and Rim Association Inc. » aux États-Unis ; « Standards Manual of The European Tyre and Rim Technical Organization » en Europe ; et « JATMA Year Book » de la Japan Automobile Tire Manufacturers Association,
dans lequel le pneu (10) présente un rapport négatif de 1 % ou plus et de 9 % ou moins.

2. Pneu (10) pour un véhicule à deux roues selon la revendication 1, dans lequel un pourcentage des lamelles de communication (31, 32, 33, 34) est de 50 % ou plus de toutes les lamelles (31, 32, 33, 34, 35).

3. Pneu (10) pour véhicule à deux roues selon la revendication 1 ou 2, dans lequel un certain nombre de lamelles (31, 32, 33, 34, 35) représentent 20 % ou plus et 200 % ou moins d'un certain nombre de rainures principales (21, 22, 23).

4. Pneu (10) pour un véhicule à deux roues selon l'une quelconque des revendications 1 à 3, dans lequel les lamelles de communication (31, 32, 33, 34) incluent une lamelle de communication (31) présentant d'une partie courbée.
